# EUROPÄISCHE PATENTSCHRIFT

(11) **EP 2 048 388 B1**
(45) Veröffentlichungstag und Bekanntmachung des Hinweises auf die Patenterteilung: **26.06.2013**
(21) Anmeldenummer: 08164238.1
(22) Anmeldetag: 12.09.2008
(51) Int. Cl.: F16C 19/18, F16C 33/37, F16C 33/58

(54) **Zweireihiges Schrägkugellager**
Double row angular contact ball bearing
Roulement à billes à contact oblique à deux rangées

(30) Priorität: 12.10.2007 DE 102007049073
(43) Veröffentlichungstag der Anmeldung: 15.04.2009
(73) Patentinhaber: Schaeffler Technologies AG & Co. KG, 91074 Herzogenaurach (DE)
(72) Erfinder: Oetjen, Jürgen, 91074 Herzogenaurach (DE)

(56) Entgegenhaltungen:
- DE-A1- 1 775 618
- FR-A- 486 104
- FR-A- 515 081

## Beschreibung

### Gebiet der Erfindung

Die Erfindung betrifft ein zweireihiges Schrägkugellager mit einem Lagerinnenring und einem Lageraußenring, zwischen den auf zugehörigen Laufbahnen axiale und radiale Kräfte aufnehmende Tragkugeln abrollen, wobei die Tragkugeln in Umfangsrichtung durch im Durchmesser kleinere Trennkugeln auf Abstand zueinander gehalten sind, wobei der mit einer Einfüllöffnung für die Trennkugeln versehene Lageraußenring einstückig ausgebildet ist und die Trennkugeln sowohl auf einer Laufbahn des Lagerinnenringes als auch auf einer Laufbahn des Lagerinnenringes abwälzen.

### Hintergrund der Erfindung

Ein derart gattungsgemäß ausgebildetes Kugellager ist aus dem Lagerkatalog 2006, Hochgenauigkeits-Spindellager, Schrägkugellager mit Trennkugeln, Lagerköpfe, Axial-Schrägkugellager der Firma UKF-Universal-Kugellager Fabrik GmbH bekannt. Wie aus Seite 28 dieser Vorveröffentlichung hervorgeht, besteht dieses Lager aus zwei Reihen nebeneinander angeordneter Tragkugeln, die auf zugehörigen Laufbahnen des Lagerinnen- und des Lageraußenringes abrollen. Die Tragkugeln werden in Umfangsrichtung nicht durch einen Käfig, sondern durch Trennkugeln auseinander gehalten. Die Trennkugeln wiederum sind von einem Führungsring umgeben, der die Außenlaufbahn stellt. Die Innenlaufbahn der Trennkugeln wird von den beiden Tragkugelreihen gebildet. Der Führungsring wiederum einschließlich Trennkugeln ist in einer Nut untergebracht, die in der Mitte des zweiteilig ausgebildeten Lageraußenringes angeordnet ist, wobei beide Hälften des Lageraußenringes durch Verbindungselemente zusammengehalten sind.

Nachteilig dabei ist, dass ein solches Lager nur sehr aufwändig herzustellen ist. Zum einen ist der Führungsring für die Trennkugeln spangebend als zusätzliches Teil zu fertigen. Zum anderen ist der Lageraußenring spangebend mit einer den Führungsring aufnehmenden umlaufenden Nut zu versehen. Schließlich besteht bei einem geteilten Lageraußenring immer die Gefahr, dass er sich beim Sprengen verzieht, so dass unzulässig große Toleranzen entstehen.

Ein ähnliches zweireihiges Kugellager ist aus der deutschen Reichspatentschrift DE 473 757 bekannt. Auch dort sind zwei tragende Kugelreihen in Umfangsrichtung nicht durch einen Käfig auf Abstand gehalten, sondern durch Trennkugeln, die ebenfalls in einem Führungsring angeordnet sind. Dieser Führungsring ist wiederum von einer Nut im Lageraußenring aufgenommen, wobei dieser Lageraußenring gleichfalls zweigeteilt ausgebildet ist. Der einzige Unterschied zwischen dem vorstehend beschriebenen gattungsgemäßen zweireihigen Schrägkugellager besteht darin, dass die Laufbahnen für die Tragkugeln sowohl im Lagerinnen- als auch im Lageraußenring keilförmig ausgebildet sind. Auch für derartig ausgebildete Lager treffen die vorstehend aufgeführten Nachteile zu.

Ein Schrägkugellager gemäß dem Oberbegriff des Anspruchs 1 ist aus der FR 486. 104 schon bekannt.

### Zusammenfassung der Erfindung

Aus den von den Nachteilen des bekannten Standes der Technik liegt der Erfindung daher die Aufgabe zugrunde, ein gattungsgemäßes zweireihiges Schrägkugellager so weiterzuentwickeln, dass es sich einfacher fertigen lässt und dass es eine höhere Präzision aufweist.

Erfindungsgemäß wird diese Aufgabe nach dem kennzeichnenden Teil von Anspruch 1 in Verbindung mit dessen Oberbegriff gelöst.

Der Vorteil des Schrägkugellagers des Oberbegriffs des Anspruchs 1 liegt darin, dass der Lageraußenring nicht aus zwei Teilen zusammengesetzt ist. Dadurch weist dieser eine wesentlich höhere Präzision auf, da ein Sprengen in zwei Teile, was mit einer Erhöhung der Toleranz verbunden ist, von vornherein vermieden ist. Ein anderer Vorteil liegt darin, dass für die die Tragkugeln auf Abstand haltenden Trennkugeln kein zusätzlicher Führungsring erforderlich ist. Das zusätzliche Schleifen der Laufbahnen sowohl im Lagerinnen- als auch im Lageraußenring stellt zwar eine zusätzliche Maßnahme dar, die jedoch im Vergleich zum bisherigen Stand der Technik vernachlässigbar ist, da die Laufbahnen für die Tragkugeln ohnehin in den Lagerringen anzubringen sind.

Auch ist erfindungsgemäß vorgesehen, dass in Umfangsrichtung zwischen je zwei benachbarten Tragkugeln mehrere Trennkugeln angeordnet sind. Dadurch ist es möglich, dass durch Reduzierung der die Last aufnehmenden Tragkugeln in einfacher Weise auf die Tragzahl des Lagers eingewirkt werden kann. Dies ist insbesondere dann von Bedeutung, wenn aus Gründen von vorgegebenen Anschlusskonstruktionen der Durchmesser des erfindungsgemäßen Lagers vorgegeben ist, die Tragzahl aber variiert werden kann.

Nach einem weiteren Merkmal der Erfindung ist vorgesehen, dass die Tragkugeln und die Trennkugeln einen gleichen Teilkreisradius aufweisen. Dies ist von Vorteil, da ein gleicher Teilkreisradius das Schleifen der Laufbahnen vereinfacht.

Nach einem zusätzlichen anderen Merkmal ist vorgesehen, dass die Tragkugeln und die Trennkugeln aus unterschiedlichen Werkstoffen bestehen. Als vorteilhaft hat es sich dabei nach einem anderen Merkmal erwiesen, dass die Trennkugeln aus Polyamid 66 hergestellt sind. Polyamid 66 ist das Polyamid mit der größten Härte, Steifigkeit, Abriebsfestigkeit und Formbeständigkeit auch in der Wärme. Es liegt auf der Hand, dass solche Trennkugeln aus einem Kunststoff zum einen wesentlich kostengünstiger als Stahlkugeln sind und zum anderen aufgrund ihrer dämpfenden Eigenschaften auch dafür sorgen, dass das Lager besonders geräuscharm arbeitet.

Weitere Merkmale der Erfindung ergeben sich aus der nachfolgenden Beschreibung und aus den Zeichnungen, in denen ein Ausführungsbeispiel der Erfindung in vereinfachter Form dargestellt ist.

### Kurze Beschreibung der Zeichnungen

Es zeigen:
- Figur 1: einen axialen Halbschnitt durch ein erfindungsgemäß ausgebilde- tes zweireihiges Schrägkugellager und
- Figur 2: eine Draufsicht auf dieses Schrägkugellager gemäß Figur 1 ohne Lageraußenring.

### Ausführliche Beschreibung der Zeichnungen

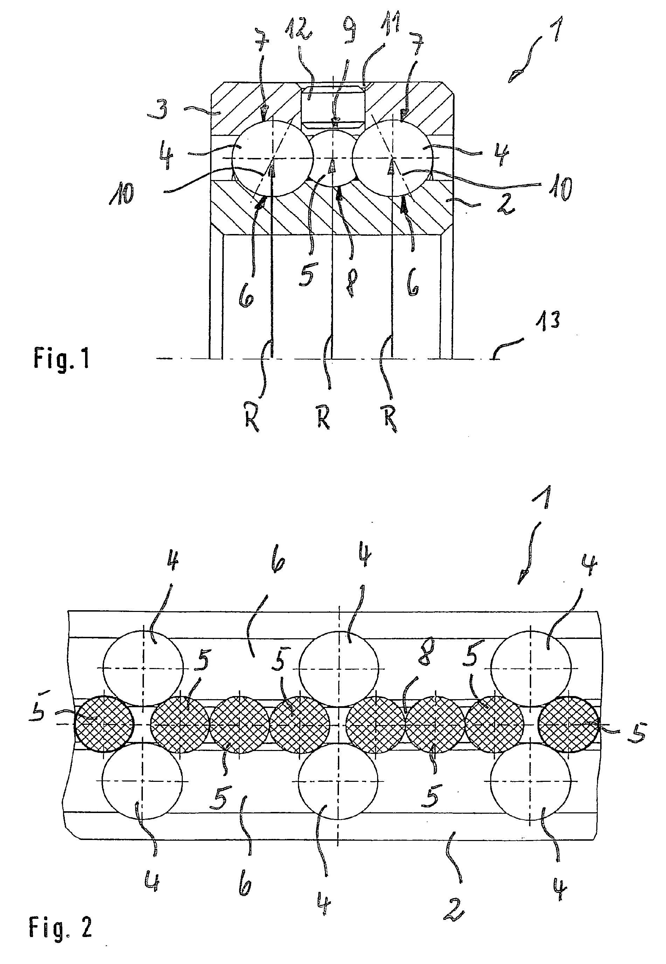

Das in den Figuren 1 und 2 dargestellte und mit der Bezugszahl 1 versehene doppelreihige Schrägkugellager besteht aus dem einstückig ausgebildeten Lagerinnenring 2 und dem gleichfalls einstückig ausgebildeten Lageraußenring 3, die konzentrisch um die Lagerachse 13 angeordnet sind. Zwischen beiden sind in axialer Richtung zwei voneinander beabstandete Tragkugelreihen 4 angeordnet, deren Spitzen der von den Kugeldrucklinien 10 gebildeten Kegel nach außen zeigen und die auf zugehörigen Innenlaufbahnen 6 und Außenlaufbahnen 7 abwälzen. In Umfangsrichtung werden die Tragkugeln 4 durch Trennkugeln 5 auf Abstand gehalten, die auf zugehörigen Laufbahnen 8, 9 der beiden Lagerringe 2, 3 abrollen. Der Lageraußenring 3 ist mit einer zentrisch angeordneten Einfüllöffnung 11 versehen, durch die die Trennkugeln 5 in das Lagerinnere gelangen und die anschließend durch den Füllstopfen 12 wieder verschlossen wird. Der Füllstopfen kann aus Aluminium gefertigt sein und ist in der Einfüllöffnung 11 durch einen Klebstoff gesichert.

Wie aus Figur 2 ersichtlich ist der Abstand der Tragkugeln 4 in Umfangsrichtung durch eine verschiedene Anzahl von Trennkugeln 5 eingestellt, wobei mit steigender Anzahl von Trennkugeln die Tragfähigkeit der Lageranordnung 1 bestimmt werden kann. Aus Figur 1 ist weiter erkennbar, dass sowohl die Tragkugeln 4 als auch die Trennkugeln 5 den gleichen mit R bezeichneten Teilkreisradius aufweisen. Die Montage des erfindungsgemäßen Schrägkugellagers 1 erfolgt derart, dass zunächst die beiden Lagerringe 2, 3 exzentrisch versetzt ineinander angeordnet sind, wobei in einem nicht dargestelltem größeren sichelförmigen Spalt die Tragkugeln eingesetzt und anschließend verteilt werden. Wenn dann die gewünschte Anzahl von Tragkugeln 4 im Lager angeordnet ist, wird über die Einfüllöffnung 11 die entsprechende Anzahl von Trennkugeln 5 dazugegeben.

### Bezugszeichen

- 1: Schrägkugellager
- 2: Lagerinnenring
- 3: Lageraußenring
- 4: Tragkugel
- 5: Trennkugel
- 6: Innenlaufbahn
- 7: Außenlaufbahn
- 8: Innenlaufbahn
- 9: Außenlaufbahn
- 10: Kugeldrucklinie
- 11: Einfüllöffnung
- 12: Füllstopfen
- 13: Lagerachse
- R: Teilkreisradius

## Patentansprüche

1. Zweireihiges Schrägkugellager (1) mit einem Lagerinnenring (2) und einem Lageraußenring (3), zwischen denen auf zugehörigen Laufbahnen (6, 7) axiale und radiale Kräfte aufnehmende Tragkugeln (4) abrollen, wobei die Tragkugeln (4) in Umfangsrichtung durch im Durchmesser kleinere Trennkugeln (5) auf Abstand zueinander gehalten sind, wobei der mit einer Einfüllöffnung (11) für die Trennkugeln (5) versehene Lageraußenring (3) einstückig ausgebildet ist und die Trennkugeln (5) sowohl auf einer Laufbahn (8) des Lagerinnenringes (2) als auch auf einer Laufbahn (9) des Lageraußenringes (3) abwälzen, **dadurch gekennzeichnet, dass** in Umfangsrichtung zwischen je zwei benachbarten Tragkugeln (4) mehrere Trennkugeln (5) angeordnet sind.

2. Zweireihiges Schrägkugellager (1) nach Anspruch 1, **dadurch gekennzeichnet, dass** die Tragkugeln (4) und die Trennkugeln (5) einen gleichen Teilkreisradius (R) aufweisen.

3. Zweireihiges Schrägkugellager (1) nach Anspruch 1, **dadurch gekennzeichnet, dass** die Tragkugeln (4) und die Trennkugeln (5) aus unterschiedlichen Werkstoffen bestehen.

4. Zweireihiges Schrägkugellager (1) nach Anspruch 3, **dadurch gekennzeichnet, dass** die Trennkugeln (5) aus Polyamid 66 bestehen.

## Claims

1. Double-row angular-contact ball bearing (1) having a bearing inner ring (2) and a bearing outer ring (3), between which load-bearing balls (4) which absorb axial and radial forces roll on associated raceways (6, 7), the load-bearing balls (4) being held at a spacing from one another in the circumferential direction by separating balls (5) of smaller diameter, the bearing outer ring (3) which is provided with a filling opening (11) for the separating balls (5) being of single-piece configuration, and the separating balls (5) rolling both on a raceway (8) of the bearing inner ring (2) and on a raceway (9) of the bearing outer ring (3), **characterized in that** a plurality of separating balls (5) are arranged in the circumferential direction between in each case two adjacent load-bearing balls (4).

2. Double-row angular-contact ball bearing (1) according to Claim 1, **characterized in that** the load-bearing balls (4) and the separating balls (5) have an identical pitch circle radius (R).

3. Double-row angular-contact ball bearing (1) according to Claim 1, **characterized in that** the load-bearing balls (4) and the separating balls (5) are composed of different materials.

4. Double-row angular-contact ball bearing (1) according to Claim 3, **characterized in that** the separating balls (5) are composed of polyamide 66.

## Revendications

1. Roulement à billes à contact oblique à deux rangées (1) comprenant une bague interne de palier (2) et une bague externe de palier (3), entre lesquelles des billes de support (4) recevant des forces axiales et radiales roulent sur des pistes de roulement associées (6, 7), les billes de support (4) étant maintenues espacées les unes des autres dans la direction périphérique par des billes de séparation (5) de plus petit diamètre, la bague extérieure de palier (3) pourvue d'une ouverture de remplissage (11) pour les billes de séparation (5) étant réalisée d'une seule pièce et les billes de séparation (5) roulant sur une piste de roulement (8) de la bague interne de palier (2) ainsi que sur une piste de roulement (9) de la bague externe de palier (3), **caractérisé en ce que** plusieurs billes de séparation (5) sont disposées dans la direction périphérique entre deux billes de support respectives adjacentes (4).

2. Roulement à billes à contact oblique à deux rangées (1) selon la revendication 1, **caractérisé en ce que** les billes de support (4) et les billes de séparation (5) présentent un rayon de cercle partiel (R) identique.

3. Roulement à billes à contact oblique à deux rangées (1) selon la revendication 1, **caractérisé en ce que** les billes de support (4) et les billes de séparation (5) se composent de matériaux différents.

4. Roulement à billes à contact oblique à deux rangées (1) selon la revendication 3, **caractérisé en ce que** les billes de séparation (5) se composent de polyamide 66.
